# DEMANDE DE BREVET EUROPEEN

(11) **EP 2 108 877 A2**
(43) Date de publication de la demande: **14.10.2009**
(21) Numéro de dépôt: 09305311.4
(22) Date de dépôt: 10.04.2009
(51) Int. Cl.: F16M 11/04, F21S 8/00, F21V 21/00, F21V 21/30, F21W 131/406

(54) **Dispositif de fixation rapide pour tête de projecteur orientable**

(30) Priorité: 11.04.2008 FR 0852432
(71) Demandeur: ZAP Technology SA, 92230 Gennevilliers (FR)
(72) Inventeur: Rebiffe, Maurice G., 75018, PARIS (FR)
(74) Mandataire: David, Alain

(57) **Abrégé**

Ensemble d'éclairage formé d'un projecteur (20) et d'un support de projecteur (22) comportant au moins un bras d'articulation (24) relié à ce projecteur par un axe d'articulation, un dispositif d'attache rapide interposé entre le projecteur et cet axe d'articulation et formé en deux parties (32, 34) adaptées pour s'accoupler mutuellement de façon à monter/démonter simplement le projecteur sur le bras d'articulation.

## Description

### Domaine de l'invention

La présente invention se rapporte au domaine de l'éclairage de scène et elle concerne plus particulièrement un dispositif pour permettre une fixation rapide d'un projecteur sur son support et l'ensemble d'éclairage en résultant.

### Art antérieur

Les projecteurs de scène ou de spectacle sont classiquement constitués d'une lampe, type lampe à décharge ou à incandescence, et d'un réflecteur (parabolique ou elliptique) pour orienter le faisceau lumineux issu de cette lampe vers un système optique comportant un ou plusieurs miroirs ou lentilles disposés dans le faisceau lumineux et devant lesquelles peuvent être placés différents obturateurs permettant la réalisation d'effets spéciaux (roues d'intensité ou de couleur, couteaux de découpe, iris ou gobos par exemple). Dans les projecteurs automatiques, ces obturateurs sont mis en place par un système de servomoteurs commandés depuis une unité centrale de commande disposée dans la base support du projecteur.

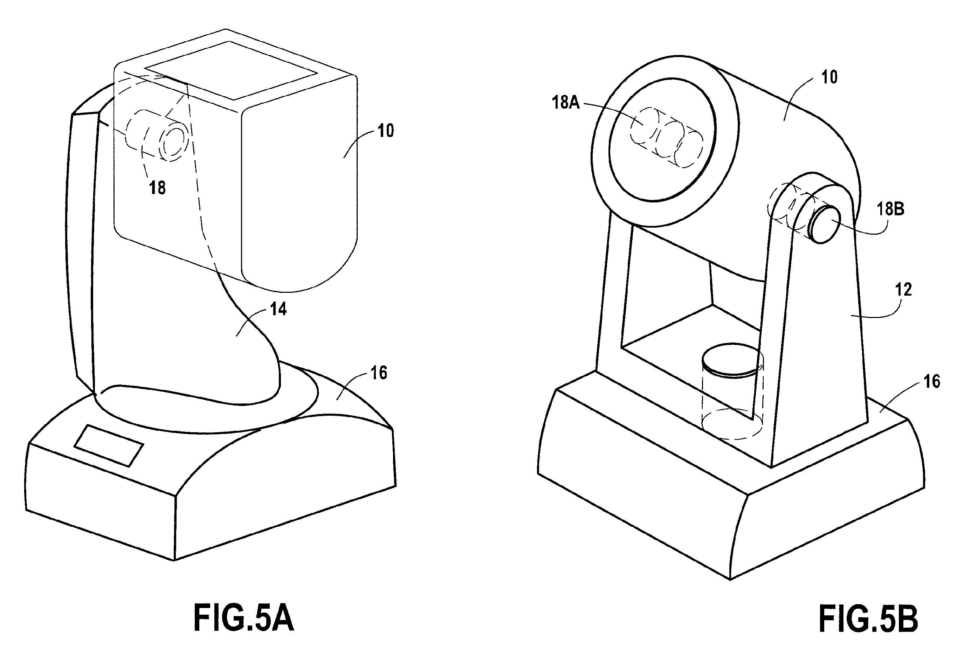

Comme l'illustrent les figures 5A et 5B, le projecteur 10 est en général articulé sur un étrier 12 ou une lyre 14 articulé à son tour sur la base support 16. L'articulation du projecteur sur son étrier ou sa lyre s'effectue par un axe d'articulation unique 18 dans le cas d'une liaison par lyre ou par deux axes d'articulation concourants 18A, 18B dans le cas d'une liaison par étrier par des moyens de fixation 14 de type vis sur un ou deux axes 16. Ce ou ces axes d'articulation s'étendent depuis le bras de cet étrier ou de cette lyre et sont solidarisés au châssis du projecteur par des moyens de fixation mis en place depuis l'intérieur du projecteur de sorte que celui-ci doit être démonté, c'est à dire que ses différents obturateurs et parfois certaines de ses lentilles doivent être enlevés, pour pouvoir accéder à l'extrémité du ou des axes d'articulation devant être solidarisé avec le châssis du projecteur.

Cette difficulté de désolidarisation n'est pas sans poser des difficultés notamment en matière de transport ou concernant la flexibilité d'emploi des projecteurs.

### Objet et définition de l'invention

La présente invention propose de pallier ces inconvénients avec un ensemble d'éclairage et un dispositif de fixation rapide associé présentant une structure simple et fiable et permettant une adaptation à tout type de projecteur.

Ces buts sont atteints par un ensemble d'éclairage formé d'un projecteur et d'un support de projecteur, ledit support comportant au moins un bras d'articulation relié audit projecteur par un axe d'articulation, caractérisé en ce qu'il comporte, interposés entre ledit projecteur et ledit axe d'articulation, un dispositif d'attache rapide pour monter et fixer de façon amovible ledit projecteur sur ledit au moins un bras d'articulation, ledit dispositif d'attache rapide étant formé en deux parties adaptées pour s'accoupler mutuellement, une première partie étant solidarisée audit projecteur et une seconde partie audit bras d'articulation et l'une de ces deux parties comportant des moyens débrayables de maintien en position pour maintenir fixement entre elles lesdites première et seconde parties une fois ledit accouplement réalisé.

Avec cette liaison amovible entre le projecteur et son support, le transport de l'ensemble d'éclairage est facilité et surtout il devient possible d'adapter très rapidement différents projecteurs à un même support.

Ladite première partie est solidaire dudit projecteur par des premiers moyens de fixation et ladite seconde partie est solidaire dudit bras d'articulation par des seconds moyens de fixation.

Selon un mode de réalisation préférentiel, lesdits moyens débrayables de maintien en position comportent un levier pivotant ayant une surface inférieure de serrage destinée à venir en contact avec ladite première partie et immobilisé en position de fermeture par un mécanisme de verrouillage manuel. Avantageusement, ledit mécanisme de verrouillage comporte un écrou de serrage vissé sur une tige articulée venant en prise avec une extrémité formant fourche dudit levier pivotant.

Avantageusement, ladite première partie comporte une forme non circulaire, de préférence sensiblement triangulaire, et épaulement pour faciliter ledit accouplement avec ladite seconde partie.

De préférence, ledit bras pivotant comporte en outre un orifice pour recevoir un pion de blocage destiné à maintenir lesdits moyens de verrouillage dans une position de fermeture.

Selon la configuration envisagée, ledit support de projecteur présente une forme d'étrier avec deux bras d'articulation comportant des axes d'articulation disposés de façon diamétralement opposée.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue en perspective éclatée d'un ensemble d'éclairage de scène muni d'un dispositif de fixation rapide selon l'invention,
- les figures 2A et 2B sont des vues en perspective éclatée de deux exemples de réalisation du dispositif de fixation rapide de la figure 1,
- la figure 3 montre le dispositif de fixation rapide de la figure 1 une fois monté,
- les figures 4A et 4B illustrent deux étapes de montage de l'ensemble d'éclairage de la figure 1, et
- les figures 5A et 5B sont des vues en perspective d'exemples d'ensemble d'éclairage de scène de l'art antérieur.

### Description détaillée d'un mode de réalisation préférentiel

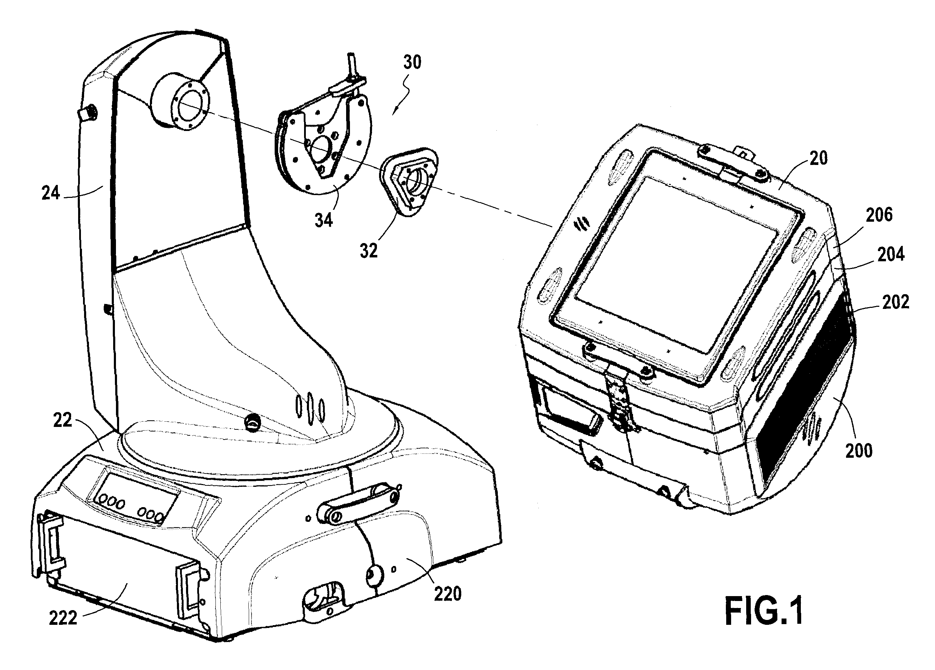

Comme il est connu, un ensemble d'éclairage d'une scène, par exemple de théâtre ou de studio, est constitué d'un projecteur de scène 20 articulé sur un support de projecteur 22 selon deux directions perpendiculaires dites de « pan » et de « tilt » classiquement par l'intermédiaire des deux bras d'articulation d'un étrier tournant sur ce support ou, de façon moins courante, par l'intermédiaire du bras unique d'articulation d'une lyre 24, comme illustré à la figure 1, également entraînée en rotation sur le support 22.

Le projecteur 20 comporte classiquement à l'intérieur d'un châssis, une source lumineuse 200, par exemple une lampe à décharge ou une lampe à incandescence, dont les rayons lumineux sont dirigés vers un réflecteur de type parabolique ou elliptique qui renvoie ces rayons vers un système optique 202, composé d'une ou plusieurs lentilles ou miroirs, assurant la concentration et la collimation de ces rayons lumineux. Différents obturateurs 204, 206 sont placés en sortie du système optique pour assurer la réalisation d'effets spéciaux, par exemple un couteau de découpe, une roue de couleur, un iris et une roue de gobos.

Le support 22 du projecteur comporte un moteur 220 pour assurer le pivotement du projecteur en rotation et élévation et une unité centrale de commande 222 pour la commande des différents obturateurs via des moteurs individuels. Cette unité centrale qui commande également le moteur de pivotement est en liaison, filaire ou non, avec un terminal externe de commande (une console électronique par exemple non représentée) piloté par un opérateur gestionnaire du spectacle.

Selon l'invention, la liaison entre le projecteur et son support n'est pas fixe mais rendue amovible par un dispositif d'attache rapide 30 interposé entre le projecteur à son support et destiné à permettre par des moyens débrayables de maintien en position à la fois une liaison fixe en fonctionnement et une désolidarisation simple de ces deux éléments lorsque cela est nécessaire, par exemple lors du transport ou lors d'un changement de projecteur.

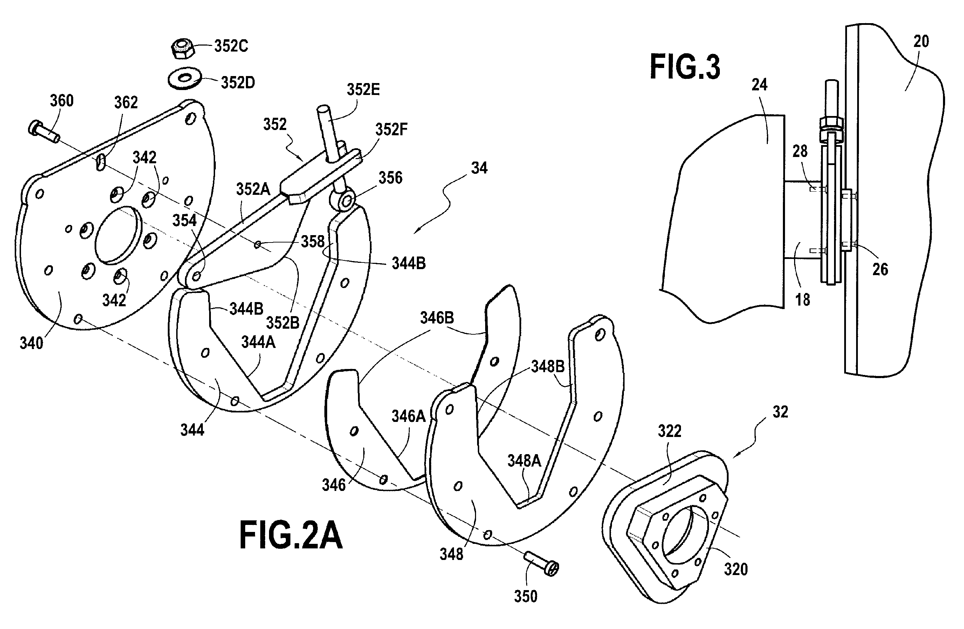

Plus particulièrement, ce dispositif d'attache est formé de deux parties s'accouplant entre elles, la première 32 étant destinée à être solidarisée au projecteur par des premiers moyens de fixation, par exemple de type vis 26, et la seconde 34 au bras d'articulation du support, par des seconds moyens de fixation, par exemple de type vis 28 (voir la figure 3), ces première et seconde parties étant maintenues fixement entres elles une fois cet accouplement réalisé par les moyens débrayables de maintien en position.

La figure 2A illustre en détail, sous la forme d'une perspective éclatée, les deux parties 32 et 34 formant le dispositif d'attache rapide de l'invention selon un premier exemple de réalisation.

La première partie 32 est formée d'une seule pièce 320 ayant, dans l'exemple illustré, une forme sensiblement triangulaire, et comportant un épaulement 322 définissant une face d'appui pour la seconde partie 34 et ayant une hauteur et une épaisseur déterminées pour coopérer avec cette seconde partie. Toutefois, toute autre forme non circulaire permettant un accouplement sans rotation est envisageable, par exemple carrée ou hexagonale.

La seconde partie 34 destinée à recevoir cette première partie est formée de l'assemblage de plusieurs pièces disposées les unes sur les autres. Tout d'abord, un flasque 340 muni d'orifices 342 pour la fixation sur le support du projecteur, plus précisément sur l'axe d'articulation 18 ; 18A, 18B de l'étrier ou de la lyre, et reposant successivement sur ce flasque, une première platine interne 344 puis une deuxième platine intermédiaire 346 et enfin une troisième platine externe 348, des moyens de fixation 350, par exemple de type boulons ou rivets, traversant ces trois platines et le flasque en différents points (avantageusement quatre à six) régulièrement répartis à la périphérie de ces éléments pour assurer ensemble leur solidarisation.

Chacune de ces platines présente une ouverture centrale 344A, 346A, 348A de forme complémentaire à la pièce 320 formant la première partie, en l'espèce triangulaire, leur donnant une forme générale en V avec une ouverture supérieure 344B, 346B, 348B pour le passage et l'alignement de cette pièce en vue de son accouplement. La platine interne comporte en outre des moyens débrayables de maintien en position 352 constitués d'un levier pivotant 352A comportant une surface inférieure de serrage 352B destinée à venir en contact avec la face périphérique de l'épaulement 322 et immobilisé en position de fermeture par un mécanisme de verrouillage manuel comportant un écrou de serrage 352C (et sa rondelle associée 352D) vissé sur une tige articulée 352E venant en prise avec une extrémité formant fourche 352F du levier pivotant.

Le pivotement du levier 352A est obtenu autour d'un premier axe 354 fixé à une extrémité dans le flasque 340 et à une autre extrémité dans la platine externe 348. Le pivotement de la tige filetée 352E est obtenue autour d'un second axe 356 fixé également à une extrémité dans le flasque 340 et à une autre extrémité dans la platine externe 348. Le levier pivotant comporte en outre un orifice 358 pour recevoir un pion de blocage 360 destiné, en traversant également le flasque 340 comportant lui-même une ouverture 362 pour le recevoir, à maintenir les moyens de verrouillage dans leur position de fermeture.

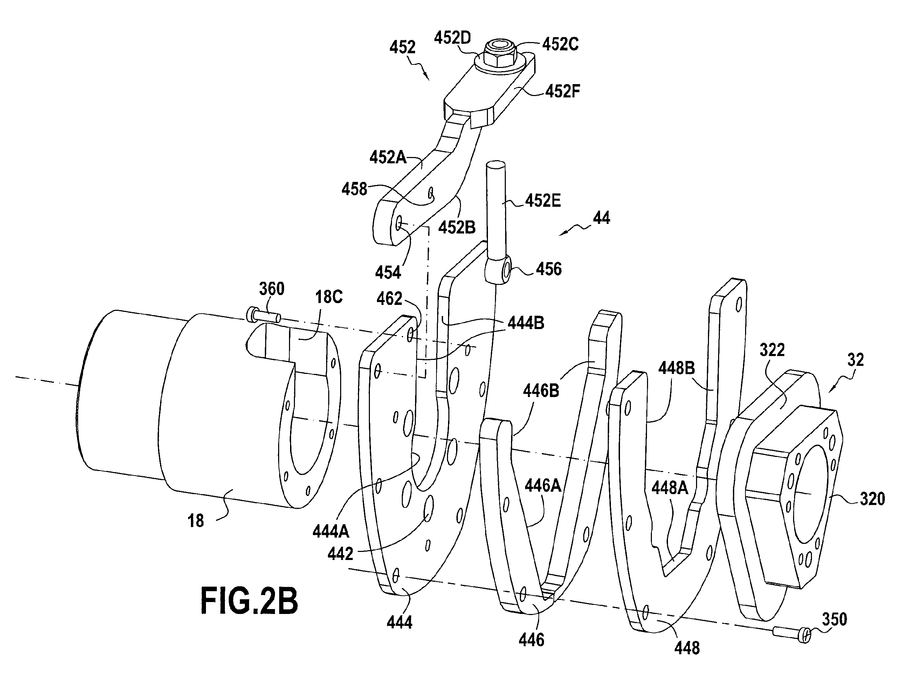

La figure 2B illustre en détail, sous la forme d'une perspective éclatée, les deux parties 32 et 34 formant le dispositif d'attache rapide de l'invention selon un second exemple de réalisation.

Dans cet exemple, la première partie 32 n'est pas modifiée et reste formée d'une seule pièce mais la seconde partie 34 destinée à recevoir cette première partie n'est plus formée par la juxtaposition de quatre platines mais de seulement trois. En effet, le flasque 340 et la platine interne 344 ne forme plus qu'une platine unique 444 comportant à la fois des orifices 442 pour la fixation sur le support du projecteur (plus précisément sur l'axe d'articulation 18 ; 18A, 18B de l'étrier ou de la lyre) et les moyens débrayables de maintien en position. Les deux autres platines restent par contre inchangées avec une platine intermédiaire 446 et une platine externe 448, et comme précédemment, les moyens de fixation 350, par exemple de type boulons ou rivets, traversent les trois platines en différents points (avantageusement quatre à six) régulièrement répartis à la périphérie de ces éléments pour assurer ensemble leur solidarisation.

Les deux platines intermédiaire et externe présentent chacune une ouverture centrale 446A, 448A de forme complémentaire à la pièce 320 formant la première partie, en l'espèce triangulaire, leur donnant une forme générale en V avec une ouverture supérieure 446B, 448B pour le passage et l'alignement de cette pièce en vue de son accouplement. La platine interne comporte quant à elle une simple ouverture centrale circulaire 444A autour de laquelle sont disposés régulièrement les orifices 442 pour la fixer à l'axe d'articulation 18 qui dans cet exemple de réalisation comporte une lumière 18C dans sa paroi extérieure. Elle comporte aussi bien entendu des moyens débrayables de maintien en position 452 constitués d'un levier pivotant 452A comportant une surface inférieure de serrage 452B destinée à venir en contact avec la face périphérique de l'épaulement 322 de la première partie 32 et immobilisé en position de fermeture par un mécanisme de verrouillage manuel comportant un écrou de serrage 452C (et sa rondelle associée 452D) vissé sur une tige articulée 452E venant en prise avec une extrémité formant fourche 452F du levier pivotant.

Le pivotement du levier 452A est obtenu autour d'un premier axe 454 fixé à une extrémité dans la platine interne 444 et à une autre extrémité dans la platine externe 448. Le pivotement de la tige filetée 452E est obtenue autour d'un second axe 456 fixé également à une extrémité dans la platine interne 444 et à une autre extrémité dans la platine externe 448. Le levier pivotant comporte également outre un orifice 458 pour recevoir le pion de blocage 360.

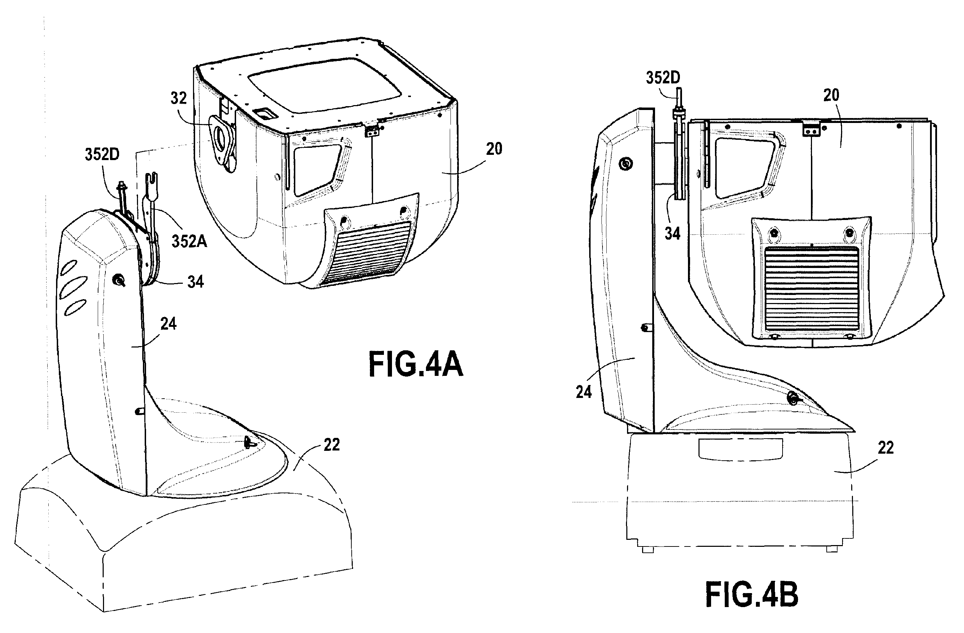

Le fonctionnement du dispositif d'attache rapide selon l'invention est maintenant explicité au regard des figures 3, 4A et 4B.

Les première et seconde parties doivent tout d'abord être fixées respectivement sur le projecteur 20 et son support, plus exactement son bras d'articulation en forme de lyre 24 dans l'exemple illustré (lorsque le projecteur est maintenu par un étrier deux dispositifs d'attache rapide sont bien évidemment nécessaires). La fixation de la seconde partie 34 sur la lyre est effectuée très simplement en positionnant celle-ci à l'extrémité de l'axe d'articulation 18 et en y fixant une à une les vis 28. La fixation de la première partie est plus délicate car elle nécessite l'ouverture du châssis du projecteur pour y introduire les vis 26 qui assurent pareillement cette fixation. Toutefois, cette ouverture n'est nécessaire que pour les projecteurs existants sur lesquels on désire adapter le dispositif d'attache rapide de l'invention et elle n'est à effectuer une fois pour toute, cette fixation se faisant bien entendu durant le processus de fabrication pour les projecteurs neufs.

Les deux parties du dispositif d'attache étant maintenant toutes deux solidarisées à leur élément respectif et les moyens débrayables de maintien en position de la seconde partie étant ouverts (levier 352A, 452A relevé et tige 352E, 452E désaccouplée comme illustré à la figure 4A), il suffit alors à un opérateur de prendre le projecteur 20 entre ses mains et de glisser verticalement la première partie dans la seconde partie, plus précisément d'introduire cette première partie entre le flasque 340 ou la platine interne 444 et la platine externe 348,448, l'épaulement 322 venant en contact avec la face interne de cette platine externe, pour placer le projecteur sur son bras d'articulation. Ensuite, le basculement du levier va mettre en contact sa face inférieure 352B, 452B avec la face périphérique de l'épaulement et ainsi permettre son parfait maintien une fois le mécanisme de verrouillage fermé, c'est-à-dire la fourche 352F, 452F en prise avec la tige 352E, 452E et l'écrou 352C, 452C serré, comme illustré à la figure 4B. L'introduction du pion 360 va ensuite sécuriser cette fixation interdisant toute ouverture inopinée du mécanisme de verrouillage, par exemple sous l'effet de vibrations. Bien entendu, les deux faisceaux de câbles issus du bras support et du projecteur auront été reliés au préalable ou pourront l'être à l'issue de cette opération d'accouplement du fait de la présence de la lumière 18C qui permet de faciliter la liaison des deux faisceaux par l'extérieur dans le second exemple de réalisation.

Ainsi fixés solidairement à son support par l'intermédiaire de sa lyre, le projecteur pourra en fonctionnement être entraîné en rotation autour de son axe d'articulation comme les ensembles de projection de l'art antérieur. Toutefois, le dispositif d'attache rapide de l'invention permet à tout moment à tout opérateur de désolidariser le projecteur de son support et ainsi par exemple de le remplacer par un autre plus adapté à la scène éclairée ou bien encore en fin de spectacle pour en faciliter le stockage et le transport.

## Revendications

1. Ensemble d'éclairage formé d'un projecteur (20) et d'un support de projecteur (22, 24), ledit support comportant au moins un bras d'articulation relié audit projecteur par un axe d'articulation (18 ; 18A, 18B), **caractérisé en ce qu'**il comporte, interposés entre ledit projecteur et ledit axe d'articulation, un dispositif d'attache rapide pour monter et fixer de façon amovible ledit projecteur sur ledit au moins un bras d'articulation, ledit dispositif d'attache rapide étant formé en deux parties (32, 34) adaptées pour s'accoupler mutuellement, une première partie étant solidarisée audit projecteur et une seconde partie audit bras d'articulation et l'une de ces deux parties comportant des moyens débrayables de maintien en position (352, 452) pour maintenir fixement entre elles lesdites première et seconde parties une fois ledit accouplement réalisé.

2. Ensemble d'éclairage selon la revendication 1, **caractérisé en ce que** ladite première partie est solidaire dudit projecteur par des premiers moyens de fixation (26).

3. Ensemble d'éclairage selon la revendication 1, **caractérisé en ce que** ladite seconde partie est solidaire dudit bras d'articulation par des seconds moyens de fixation (28).

4. Ensemble d'éclairage selon la revendication 1, **caractérisé en ce que** lesdits moyens débrayables de maintien en position comportent un levier pivotant (352A, 452A) ayant une surface inférieure de serrage (352B, 452B) destinée à venir en contact avec ladite première partie et immobilisé en position de fermeture par un mécanisme de verrouillage manuel (352C-352F ; 452C-452F).

5. Ensemble d'éclairage selon la revendication 4, **caractérisé en ce que** ledit mécanisme de verrouillage comporte un écrou de serrage (352C, 452C) vissé sur une tige articulée (352E, 452E) venant en prise avec une extrémité formant fourche (352F, 452F) dudit levier pivotant.

6. Ensemble d'éclairage selon la revendication 4, **caractérisé en ce que** ledit levier pivotant comporte en outre un orifice (358, 458) pour recevoir un pion de blocage (360) destiné à maintenir lesdits moyens de verrouillage dans une position de fermeture.

7. Ensemble d'éclairage selon la revendication 1, **caractérisé en ce que** ladite première partie comporte une forme non circulaire, de préférence sensiblement triangulaire.

8. Ensemble d'éclairage selon la revendication 1, **caractérisé en ce que** ladite première partie comporte un épaulement (322) pour faciliter ledit accouplement avec ladite seconde partie.

9. Ensemble d'éclairage selon la revendication 1, **caractérisé en ce que** ledit support de projecteur présente une forme d'étrier avec deux bras d'articulation comportant des axes d'articulation (18A, 18B) disposés de façon diamétralement opposée.
